# EUROPÄISCHE PATENTSCHRIFT

(11) **EP 4 415 993 B1**
(45) Veröffentlichungstag und Bekanntmachung des Hinweises auf die Patenterteilung: **01.07.2026**
(21) Anmeldenummer: 22786299.2
(22) Anmeldetag: 12.09.2022
(51) Int. Cl.: B60G 21/055, B62D 5/04

(54) **VERSTELLBARER WANKSTABILISATOR**
ADJUSTABLE ROLL STABILIZER
STABILISATEUR DE ROULIS RÉGLABLE

(30) Priorität: 15.10.2021 DE 102021211662
(43) Veröffentlichungstag der Anmeldung: 21.08.2024
(73) Patentinhaber: ZF Friedrichshafen AG, 88046 Friedrichshafen (DE)
(72) Erfinder: GRODDE, Benjamin, 88212 Ravensburg (DE); GAGG, Daniel, 88074 Meckenbeuren (DE)
(74) Vertreter: ZF Friedrichshafen AG
(86) Internationale Anmeldenummer: PCT/EP2022/075202
(87) Internationale Veröffentlichungsnummer: WO 2023/061676

(56) Entgegenhaltungen:
- DE-A1- 102015 115 118
- DE-A1- 102017 200 429
- DE-A1- 102017 223 813
- DE-A1- 102019 103 875

## Beschreibung

Die Erfindung betrifft einen verstellbaren Wankstabilisator für ein Kraftfahrzeug gemäß Anspruch 1.

Mechatronische Fahrwerkeinrichtungen unterschiedlicher Art zum Einsatz an einem Kraftfahrzeug sind aus dem Stand der Technik bekannt. Im Rahmen der vorliegenden Erfindung wird darunter eine am Fahrwerk eines Kraftfahrzeugs zum Einsatz kommende Einrichtung verstanden, die für sich gesehen und/oder im Zusammenwirken mit weiteren dem Kraftfahrzeug zugeordneten Einrichtungen ein mechatronisches System bildet. Entsprechend kann es sich bei der mechatronischen Fahrwerkeinrichtung um eine Komponente eines mechatronischen Systems und/oder um ein solches System selbst handeln. Gemäß einem bevorzugten Anwendungsgebiet der Erfindung handelt es sich bei der mechatronischen Fahrwerkeinrichtung um einen Aktuator für einen verstellbaren Wankstabilisator eines Kraftfahrzeugs.

Ganz allgemein ist es bekannt, Kraftfahrzeuge zur Steigerung der Fahrzeugstabilität sowie des Fahrkomforts mit einem sogenannten Wankstabilisator auszustatten. In einfachster Ausführung handelt es sich hierbei um eine im wesentlichen C-förmige Drehstabfeder, die im mittigen Bereich drehbar gegenüber dem Fahrzeugaufbau gelagert ist und deren äußere, sich gegenüberliegende Enden jeweils mit einer Radaufhängung gekoppelt sind. Durch diese Konstruktion sorgt der Wankstabilisator dafür, dass der Fahrzeugaufbau bei einer Kurvenfahrt nicht nur an der kurvenäußeren Seite einfedert (bedingt durch die Zentrifugalkraft), sondern dass zudem das kurveninnere Rad etwas abgesenkt wird.

Zur weiteren Steigerung des Fahrkomforts und der Fahrzeugstabilität ist es darüber hinaus bekannt, derartige Wankstabilisatoren verstellbar auszuführen. Der Wankstabilisator umfasst zu diesem Zweck einen Aktuator und ist in zwei mit Hilfe des Aktuators relativ zueinander verdrehbare Stabilisatorabschnitte geteilt. Durch Verdrehung der Stabilisatorabschnitte zueinander um eine Rotationsachse wird eine Wankbewegung des Fahrzeugaufbaus gezielt erzeugt, oder es wird einer durch äußere Einflüsse hervorgerufenen Wankbewegung des Fahrzeugaufbaus gezielt entgegengewirkt.

Zweckmäßigerweise dient bei bekannten verstellbaren Wankstabilisatoren ein Elektromotor als Antrieb des Aktuators, wobei der Elektromotor zumeist mit einem mechanischen Getriebe, insbesondere in Bauform eines ein- oder mehrstufigen Planetengetriebes antriebsverbunden ist, um die Motordrehzahl bzw. das Drehmoment des Motors geeignet zu übersetzen. Verwiesen sei in diesem Zusammenhang beispielsweise auf DE 10 2017 200 556 A1, die einen verstellbaren Wankstabilisator beschreibt.

Auf dem technischen Gebiet verstellbarer Wankstabilisatoren für Kraftfahrzeuge stellt der sogenannte Aktuator eine mechatronische Fahrwerkeinrichtung dar. Diese weist üblicherweise ein Gehäuse und zumindest ein in dem Gehäuse befindliches Funktionselement auf. Unter einem Funktionselement können verschiedenartige Bauteile, Baugruppen oder dergleichen verstanden werden, die innerhalb der mechatronischen Fahrwerkeinrichtung eine Funktion erfüllen. Insbesondere können von dem Funktionselement mechanische, elektrotechnische und/oder informationstechnische einschließlich messtechnischer Aufgaben ausgeführt werden.

Ganz allgemein besteht im betrieblichen Einsatz eines verstellbaren Wankstabilisators der Bedarf das zumindest eine in dem Gehäuse befindliche Funktionselement der mechatronischen Fahrwerkeinrichtung bei Betrieb des Kraftfahrzeugs vor äußeren Einflüssen zu schützen. Bedingt durch die Anordnung mechatronischer Fahrwerkeinrichtungen unterhalb des Fahrzeugaufbaus, damit in der Nähe zum überfahrenen Boden, ist diese bei Betrieb des Kraftfahrzeuges unter anderem dem Einfluss, insbesondere der Außeneinwirkung von Wasser ausgesetzt. Für ein im Gehäuse der mechatronischen Fahrwerkeinrichtung befindliches Funktionselement kann in das Gehäuse eintretendes Wasser nachteilige Auswirkungen unterschiedlicher Art haben. In Bezug auf ein mechanisches Funktionselement können beispielsweise Fehlfunktionen wie beispielsweise durch Verschmutzung, Korrosion auftreten. Bei elektrischen oder elektronischen Funktionselementen kann es bedingt durch Kurzschluss zudem zu Störungen, Ausfall oder gar Zerstörung kommen; all dies beeinträchtigt dann auch die Funktion der mechatronischen Fahrwerkeinrichtung insgesamt.

Bei einer mechatronischen Fahrwerkeinrichtung in Form eines Aktuators für einen verstellbaren Wankstabilisator befindet sich im Gehäuse üblicherweise auch eine mechatronische Komponente in Form einer elektronischen Leiterplatte zur Aufnahme der Steuerungselektronik, die einerseits leistungsmäßig sowie signaltechnisch mit dem Kraftfahrzeug, andererseits mit dem Elektromotor sowie dem Aktuator zugeordneten Sensoren verbunden ist. Nicht nur, aber ganz besonders für elektrische und/oder elektronische Funktionselemente innerhalb des Gehäuses der mechatronischen Fahrwerkeinrichtung besteht ein Bedarf für einen Schutz vor Außeneinwirkung durch Wasser oder vergleichbare Medien.

Aus DE 10 2016 222 251 A1 ist eine mechatronische Fahrwerkeinrichtung in Form eines verstellbaren Wankstabilisators bekannt, deren Gehäuse sich mittels der Zufuhr von Druckluft über ein dazu genutztes Prüfkabel auf Dichtheit prüfen lässt. Eine Dichtheitsprüfung stellt eine Qualitätskontrolle zu einem bestimmten Zeitpunkt (z.B. nach der Montage beziehungsweise Herstellung) dar. Später eintretende, beispielsweise alterungs- oder verschließbedingte Veränderungen der mechatronischen Fahrwerkkomponente können dazu führen, dass eine anfangs festgestellte Dichtheit zu einem späteren Zeitpunkt nicht mehr gewährleistet ist. Daneben erfordert die Methode das Vorhandensein eines zum Einbringen von Druckluft geeigneten Prüfkabels.

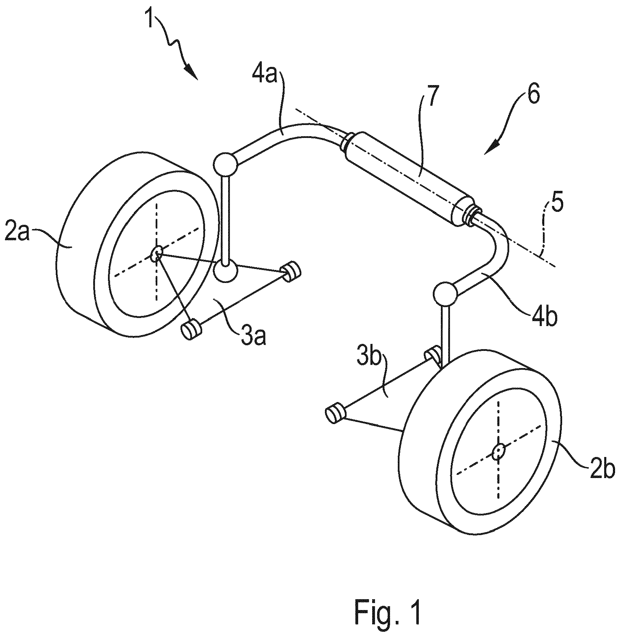

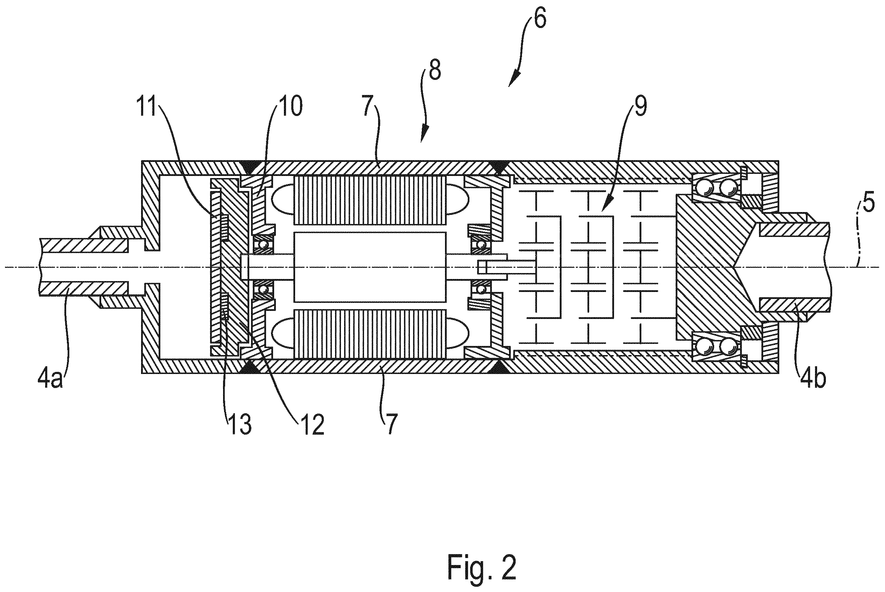

DE 10 2015 115 118 A1 offenbart eine Vorrichtung zum Betreiben eines elektrischen Lenksystems. Das Lenksystem weist gemäß Darstellung der dortigen Fig. 1 einen Elektromotor als Aktuator auf. Daneben weist das Lenksystem ein erstes und ein dazu zumindest teilweise redundantes zweites Elektroniksystem auf, welche als Bestandteile eines Steuergeräts zum Betreiben des Aktuators dienen. Die Elektroniksysteme sind gemäß dortiger Fig. 2 in Verbindung mit dortigen [0024] und [0026] innerhalb eines (Steuergerät-)Gehäuses zusammen auf einer als Trägersubstrat dienenden Leiterplatte 16 angeordnet. Das Trägersubstrat ist gemäß dortigem Anspruch 1 mit einer Schutzschicht zumindest bereichsweise flüssigkeitsdicht versiegelt. Dabei ist das erste Elektroniksystem durch die Schutzschicht im Wesentlichen versiegelt, während das zweite Elektroniksystem zumindest teilweise schutzschichtfrei ist.

Gemäß dortigem [0006] werde auf diese Weise das erste Elektroniksystem vor Wassereintritt durch die Versiegelung geschützt, das zweite Elektroniksystem hingegen bewusst nicht oder kaum. Indem zumindest das zweite Elektroniksystem mit einer Sensoreinrichtung zum Erkennen des Eintritts eines flüssigen Mediums ausgestattet ist, sei es möglich, mittels des zweiten Elektroniksystems einen Wassereinbruch in das (gemeinsame) Steuergerät frühzeitig festzustellen, um dann beispielsweise das erste Elektroniksystem trotz des Wassereinbruchs noch weiter betreiben zu können. In DE 10 2015 115 118 A1 beschränken sich die Maßnahmen auf den Schutz vor und die Erkennung von Wassereintritt auf Elektroniksysteme bzw. auf ein Steuergerät, das solche Elektroniksysteme beinhaltet. Die beschriebene Redundanz bringt einen hohen Aufwand mit sich.

Weiterhin sei auf DE 10 2019 103 875 A1 hingewiesen. Diese offenbart einen verstellbaren Wankstabilisator gemäß dem Oberbegriff des Anspruchs 1 und beschreibt einen verstellbaren Wankstabilisator mit einer als Aktuator ausgeführten mechatronischen Fahrwerkeinrichtung, mit der sich gegenüberliegend daran angebrachte Stabilisatorabschnitte (siehe dortige Fig. 1) auf für sich gesehen bekannten Weise um eine Rotationsachse gegeneinander verdrehen lassen. An einem abtriebsseitigen Ende des Aktuators ist ein Axialring zwischen Gehäuse und dem abtriebsseitig drehbar gegenüber dem Gehäuse gelagerten Stabilisatorabschnitt wirkend angeordnet, der ein als Radialwellendichtring ausgeführtes Dichtungselement aufweist. Das Dichtungselement und die gesamte Gestaltung des Dichtkonzepts sollen zu einem sicheren Betriebsverhalten des Wankstabilisators beitragen. Die Zielsetzung der DE 10 2019 103 875 A1 beschränkt sich auf das physische Verhindern von Wassereintritt durch geeignete Abdichtung.

Es ist eine Aufgabe der vorliegenden Erfindung einen verstellbarer Wankstabilisator für ein Kraftfahrzeug anzugeben, der auf alternative Weise und mit konstruktiv geringem Aufwand zum Schutz der mechatronischen Fahrwerkeinrichtung vor dem Außeneinfluss flüssiger Medien, insbesondere Wasser auch während des betrieblichen Einsatzes beitragen kann.

Die Aufgabe wird gelöst durch einen verstellbaren Wankstabilisator gemäß den Merkmalen des Anspruchs 1.

Erfindungsgemäß wurde damit eine gegenüber DE 10 2016 222 251 A1 alternative Lösung gefunden, ein im Gehäuse einer mechatronischen Fahrwerkeinrichtung befindliches Funktionselement vor nachteiligen Auswirkungen des Eintritts äußerer Medien schützen zu können. Dabei wurde erkannt, dass insbesondere flüssige Medien, die in das Gehäuse beispielsweise aufgrund von Undichtigkeiten eintreten, die Funktionsfähigkeit negativ beeinträchtigen können. Zugleich wurde erkannt, dass sich der Eintritt eines flüssigen Mediums in das Gehäuse auf technisch verhältnismäßig einfache Weise erkennen lässt. Das Erkennen eines Medieneintritts stellt wiederum eine entscheidende Maßnahme dar, um sich daraus ergebende negative Folgen dieses Ereignisses abzuschwächen oder im Idealfall sogar ganz abzuwenden. Es sind verschiedene Mittel denkbar, mit denen sich der Eintritt eines flüssigen Mediums in das Gehäuse erkennen lässt.

Weitere Möglichkeiten zur Erkennung eines Eintritts einer Flüssigkeit in ein Aktuatorgehäuse sind in den Dokumenten DE 10 2017 223813 A1 und DE 10 2017 200429 A1 beschrieben.

Gemäß einer bevorzugten Weiterbildung der mechatronischen Fahrwerkeinrichtung des verstellbaren Wankstabilisators beinhalten die Mittel zur Erkennung des Eintritts eines flüssigen Mediums in das Gehäuse eine Sensoranordnung, die betreibbar ist, einen Füllstand des Gehäuses mit einem elektrisch leitfähigen Medium zu überwachen. Dieser Maßnahme liegt die Erkenntnis zugrunde, dass das Gehäuse der mechatronischen Fahrwerkeinrichtung nicht nur der Aufnahme zumindest eines Funktionselementes, zur Kraft - und Drehmomentübertragung sowie zum Schutz vor äußeren mechanischen Einflüssen dient, sondern dass das Gehäuse auch ein Behältnis bildet, innerhalb dessen sich ein in das Gehäuse eingetretenes flüssiges Medium wie beispielsweise Wasser ansammelt. Schwerkraftbedingt sammelt sich ein solches flüssiges Medium automatisch am tiefsten Punkt des Gehäuses an, mit anderen Worten füllt sich das Gehäuse mit zunehmendem Medieneintritt mit dem Medium, beispielsweise mit Wasser. Diese Erkenntnis macht sich die Erfindung zu Nutze, unter weiterer Nutzung der Erkenntnis über die elektrische Leitfähigkeit des üblicherweise eintretenden Mediums Wasser. Die elektrische Leitfähigkeit ermöglicht auf konstruktiv einfache Weise, einen Füllstand des Gehäuses mit dem elektrisch leitfähigen flüssigen Medium zu überwachen. Eine Füllstandsüberwachung des Gehäuses mit einem elektrisch leitfähigen, flüssigen Medium, wie insbesondere Wasser lässt sich vorteilhaft verwirklichen, indem eine im Gehäuse verlaufende Messstrecke, vorzugsweise eine Mehrzahl derartiger Messstrecken auf deren elektrische Leitfähigkeit überwacht wird. Eine derartige Messstrecke ist also zweckmäßigerweise derart gestaltet, dass sich deren elektrische Leitfähigkeit bei einem Medieneintritt mit Erreichen eines bestimmten Füllstands des Gehäuses verändert. Im Gehäuse kann eine einzige derartige Messstrecke vorgesehen sein, um dies zu verwirklichen. Durch Anordnung mehrerer derartiger Messstrecken kann ein Medieneintritt unterschiedlicher Art, unterschiedlichen Ausmaßes oder unter unterschiedlichen Bedingungen (zum Beispiel unterschiedliche Ausrichtung) erkannt werden.

Gemäß einer zweckmäßigen Weiterbildung der mechatronischen Fahrwerkeinrichtung des verstellbaren Wankstabilisators ist deren Gehäuse aus einem elektrisch leitfähigen Material hergestellt. Eine wie zuvor beschriebene Messstrecke verläuft vorzugsweise jeweils von einem an dem Funktionselement befindlichen Messpunkt zum elektrisch leitfähigen Gehäuse. Eine derartige Anordnung bietet den Vorteil, dass sich auf konstruktiv einfache Weise Messstrecken bilden lassen, da bereits das Gehäuse als elektrisch leitfähiger Körper als ein Endpunkt der Messstrecke genutzt werden kann. Bei entsprechender elektrischer Schaltung, zweckmäßigerweise einer Verbindung des Gehäuses mit dem Massepotential der Überwachungsschaltung, kann die Überwachung der Messstrecke auf deren elektrische Leitfähigkeit somit durch Überwachung der elektrischen Spannung zwischen dem jeweiligen Messpunkt gegenüber dem Gehäuse (gleich Massepotential) erfolgen. Dadurch ist mit einfachen Mitteln eine Möglichkeit zur Erkennung des Eintritts eines flüssigen Mediums in das Gehäuse geschaffen.

Wie Eingangs bereits erwähnt, kann es sich bei dem im Gehäuse befindlichen Funktionselement grundsätzlich um jedwede Art von Bauteil oder Baugruppe handeln. Erfindungsgemäß handelt es sich bei dem zumindest einen in dem Gehäuse befindlichen Funktionselement um eine mechatronische Komponente in Form einer Leiterplatte zur Aufnahme elektronischer Bauteile, die zur Steuerung und/oder Energieversorgung eines weiteren im Gehäuse angeordneten Funktionselements und/oder zur Signalverarbeitung dienen. Da insbesondere auf einer Leiterplatte elektrische und/oder elektronische Komponenten angeordnet sind, die in der Regel empfindlich gegenüber Feuchtigkeitseinfluss sind, und da sich auf einer Leiterplatte auf konstruktiv verhältnismäßig einfache Weise Messpunkte anordnen lassen, kann so auf einfache Weise ein effektiver Schutz eines besonders gefährdeten Funktionselements innerhalb des Gehäuses verwirklicht werden.

Eine besondere Bedeutung kann der Erfindung zusätzlich zukommen, wenn sich das Funktionselement in Form einer Leiterplatte in wenigstens zwei insbesondere galvanisch voneinander getrennte Bereiche gliedert. Eine solche Gliederung kann beispielsweise dadurch bedingt sein, dass das die mechatronische Fahrwerkeinrichtung aufnehmende Kraftfahrzeug über zwei auf unterschiedlichem Spannungsniveau arbeitende Bordnetze verfügt und jeder der zwei galvanisch voneinander getrennten Bereiche einem unterschiedlichem Bordnetz zugeordnet ist. In diesem Fall besteht ein erhöhter Bedarf, ein Kurzschließen zwischen diesen beiden Bereich zu verhindern, zumal in diesem Fall nicht nur Fehlfunktionen oder Beschädigungen an der mechatronischen Fahrwerkeinrichtung, sondern sogar am Fahrzeug bzw. dessen Bordnetz(en) oder damit verbundenen weiteren Einrichtungen des Fahrzeugs auftreten können.

Erfindungsgemäß weist das Funktionselement einen gehäusenahen, umfänglich verlaufenden Randabschnitt auf, an welchem eine Mehrzahl voneinander beabstandeter Messpunkte angeordnet sind. Durch eine randnahe Anordnung der Messpunkte ergibt sich jeweils eine verhältnismäßig kurze Messstrecke (da Messpunkt und kürzeste Entfernung zum Gehäuse verhältnismäßig klein sind). Entsprechend kann über eine bezogen auf eine Gehäusemitte untenliegende Messstrecke bereits ein verhältnismäßig geringer Füllstand im Gehäuse erkannt werden.

Vorteilhaft ist das Funktionselement in Form einer Leiterplatte als im Wesentlichen flacher Körper mit zur Rotationsachse des Gehäuses orthogonaler Einbaulage ausgebildet. Das Funktionselement erstreckt sich in diesem Fall also im Wesentlichen in einer Ebene, die quer zur Rotationsachse des Gehäuses verläuft.

Abhängig von der Art der mechatronischen Fahrwerkeinrichtung kann deren Gehäuse unterschiedlich gestaltet sein. In Bezug auf die Erfindung ergibt sich eine vorteilhafte Wirkung, wenn das Gehäuse eine zylindrische, sich entlang einer Rotationsachse erstreckende Grundform aufweist. Bei einer in Einbaulage der mechatronischen Fahrwerkeinrichtung etwa waagerecht verlaufenden Rotationsachse bietet eine zylindrische Grundform des Gehäuses nämlich den Vorteil, dass ein in das Gehäuse eingetretenes flüssiges Medium sich automatisch im tiefsten Bereich des Gehäuses ansammelt und dort mittels der Sensoranordnung auf einfache Weise erfasst werden kann.

Erfindungsgemäß sind die mehreren Messpunkte der Sensoranordnung jeweils unter Zwischenschaltung eines Reihenwiderstands an eine elektrische Spannungsquelle angeschlossen, wobei das Gehäuse, unter Zwischenschaltung eines Reihenwiderstands, mit dem Massepotential der elektrischen Spannungsquelle verbunden ist.

In vorteilhafter Weise erfolgt die Überwachung einer so gestalteten Messstrecke auf deren elektrische Leitfähigkeit durch Überwachung der elektrischen Spannung zwischen einem jeweiligen Messpunkt und dem Gehäuse, insbesondere mittels eines Steuergeräts.

Die mechatronische Fahrwerkeinrichtung des verstellbaren Wankstabilisators zeichnet sich vorteilhaft aus durch ein Steuergerät, das betreibbar ist, einen Spannungsabfall an einem der Messpunkte unter einen vorgebbaren Schwellwert dem Ereignis eines erfolgten Medieneintritts in das Gehäuse zuzuordnen und eine Ersatzreaktion auszulösen. Bei einer Ersatzreaktion kann es sich im einfachsten Fall um eine Fehlermeldung handeln, weitere oder alternative Maßnahmen wie ein Abschalten der mechatronischen Fahrwerkeinrichtung oder sonstiger Fahrzeugeinrichtungen oder einer Meldung an ein übergeordnetes System auf Fahrzeugebene sind denkbar.

Gemäß einer vorteilhaften Weiterbildung der mechatronischen Fahrwerkeinrichtung des verstellbaren Wankstabilisators ist bzw. sind ein Messpunkt, vorzugsweise die mehreren Messpunkte jeweils so angeordnet, dass im Fall eines Medieneintritts und ab Erreichen einer kritischen Befüllung des Gehäuses mit dem flüssigen Medium zumindest ein Messpunkt in das Medium eintaucht und dadurch eine elektrische Verbindung zwischen dem eingetauchten Messpunkt und dem Gehäuse herstellt.

Weiterhin vorteilhaft sind die mehreren Messpunkte über einen umfänglichen Bereich des Gehäuses verteilt, so dass unabhängig von der rotatorischen Ausrichtung des Gehäuses und/oder des Funktionselements in Bezug auf die Rotationsachse zumindest ein Messpunkt in einem unten liegenden Bereich des Gehäuses liegt und damit zur frühen Erkennung eines Medieneintritts in das Gehäuse nutzbar ist. Eine derartige Verteilung mehrere Messpunkte über den Umfang des Gehäuses bietet also den Vorteil, dass eine Medieneintrittserkennung auch bei unterschiedlicher Ausrichtung des Gehäuses (Drehung um die Rotationsachse) und/oder des Funktionselements (Einbaulage) auf ähnliche Weise möglich ist. Dies erweitert das Anwendungsgebiet und erleichtert die Montage.

Es wurde bereits erwähnt, dass es sich bei der mechatronischen Fahrwerkeinrichtung um einen Aktuator für einen verstellbaren Wankstabilisator handelt.

Die mechatronische Fahrwerkeinrichtung in Form eines Aktuators für einen verstellbaren Wankstabilisator umfasst auch einen Elektromotor und ein Getriebe, vorzugsweise ein mehrstufiges Planetengetriebe, wobei Elektromotor und Getriebe zusätzlich zum Funktionselement in dem Gehäuse der mechatronischen Fahrwerkeinrichtung angeordnet sind.

Erfindungsgemäß weist der verstellbare Wankstabilisator für ein Kraftfahrzeug zwei Stabilisatorabschnitte, die mit Radaufhängungen zugehöriger Räder des Kraftfahrzeugs koppelbar sind, und eine wie zuvor beschriebene mechatronische Fahrwerkeinrichtung auf, mit der sich die Stabilisatorabschnitte um eine Rotationsachse gegeneinander verdrehen lassen, um ein Wankverhalten des Kraftfahrzeugs zu beeinflussen.

Die Erfindung wird nachfolgend anhand der beigefügten Zeichnung näher erläutert. Daraus ergeben sich auch weitere vorteilhafte Effekte der Erfindung. In der Zeichnung zeigt:
- Figur 1: einen verstellbaren Wankstabilisator in schematischer Ansicht,
- Figur 2: eine mechatronische Fahrwerkeinrichtung in Form eines Aktuators für einen verstellbaren Wankstabilisator in schematischer Schnittdarstellung,
- Figur 3: eine Sensoranordnung für eine mechatronische Fahrwerkeinrichtung wie anhand von Figur 2 beschrieben, in schematischer Ansicht,
- Figur 4: die Sensoranordnung wie in Figur 3 nach einem Medieneintritt,
- Figur 5: die Sensoranordnung wie in Figur 3 mit Kennzeichnung eines besonders gefährdeten Bereichs für einen Medieneintritt,
- Figur 6: eine schematische Darstellung eines weiteren Beispiels einer Schaltungsanordnung.

Zunächst zeigt Figur 1 zur Veranschaulichung des bevorzugten Einsatzgebietes der Erfindung einen verstellbaren Wankstabilisator 1 in vereinfachter schematischer Ansicht. Der verstellbare Wankstabilisator 1 ist Teil eines nicht vollständig gezeigten Fahrwerks eines (nicht dargestellten) Kraftfahrzeugs. Ein linkes Rad 2a und ein auf der gegenüberliegenden Fahrzeugseite angeordnetes rechtes Rad 2b sind jeweils über eine linke Radaufhängung 3a bzw. eine rechte Radaufhängung 3b mit einem aus Darstellungsgründen hier nicht dargestellten Aufbau des Kraftfahrzeugs verbunden. Jede der Radaufhängungen 3a, 3b ist über ein Kopplungsmittel in Form einer hier nicht näher bezeichneten Pendelstütze an ein Ende eines zugehörigen linken Stabilisatorabschnitts 4a bzw. rechten Stabilisatorabschnitts 4b gekoppelt. Die beiden Stabilisatorabschnitte 4a und 4b sind fahrzeugmittig über einen Aktuator 6 miteinander verbunden.

Auf für sich gesehen bekannte Weise ist der verstellbare Wankstabilisator 1 um eine Rotationsachse 5 drehbar gegenüber dem Fahrzeugaufbau gelagert (Lagerung nicht gezeigt). Der Aktuator 6, hier vereinfacht dargestellt als zylindrischer Körper, weist ein Gehäuse 7 auf, in welchem unter anderem ein Elektromotor sowie ein damit antriebsverbundenes mehrstufiges Planetengetriebe angeordnet sind. Über die Motor-Getriebe-Einheit stehen die Stabilisatorabschnitte 4a und 4b in Antriebsverbindung miteinander. Bei ruhendem Elektromotor sind die beiden Stabilisatorabschnitte 4a, 4b über den Aktuator 6 starr miteinander verbunden. Durch Betrieb des Elektromotors lassen sich die Stabilisatorabschnitte 4a, 4b abhängig von der Drehrichtung des Elektromotors um die Rotationsachse 5 gegeneinander verdrehen. So lässt sich der verstellbare Wankstabilisator 1 auf für sich gesehen bekannte Weise verstellen.

Figur 2 zeigt in schematischer, vereinfachter Ansicht einen Aktuator 6 in Schnittdarstellung, der an einem verstellbaren Wankstabilisator 1 wie anhand von Figur 1 erläutert, zum Einsatz kommen kann. Demnach erstreckt sich das Gehäuse 7 des Aktuators 6 als im Wesentlichen zylindrischer Körper entlang der Rotationsachse 5. Der linke Stabilisatorabschnitt 4a ist drehfest mit dem Gehäuse 7 des Aktuators 6 verbunden. Der rechte Stabilisatorabschnitt 4b ist mit einem Abtriebselement verbunden, das über ein Wälzlager drehbar gegenüber dem Gehäuse 7 des Aktuators 6 gelagert ist und eine Abtriebsseite der im Gehäuse 7 befindlichen Motor-GetriebeEinheit bildet. Auf für sich gesehen bekannte Weise nimmt das Gehäuse 7 einen Elektromotor 8 auf, der eine zur Rotationsachse 5 koaxiale Abtriebswelle aufweist. Der Elektromotor 8 treibt darüber ein in diesem Fall dreistufiges Planetengetriebe 9 an, das abtriebsseitig mit dem rechten Stabilisatorabschnitt 4b in Antriebsverbindung steht. Entsprechend lässt sich durch Betrieb des Elektromotors 8 das mehrstufige Planetengetriebe 9 antreiben, um auf diese Weise den rechten Stabilisatorabschnitt 4b gegenüber dem (gehäusefesten) linken Stabilisatorabschnitt 4a um die Rotationsachse 5 zu verdrehen.

Auf einer dem Planetengetriebe 9 abgewandten Seite des Elektromotors 8 befindet sich ein am Gehäuse 7 befestigtes Lagerschild 10, unter anderem zur Lagerung der Motorwelle des Elektromotors 8.

In dem Gehäuse 7 des Aktuators 6 befindet sich neben dem Elektromotor 8 und dem mehrstufigen Planetengetriebe 9 ein weiteres wesentliches Funktionselement, in Form einer Leiterplatte 11. Es handelt sich bei der Leiterplatte 11 um eine Platte zur Aufnahme elektronischer Bauteile, die ganz allgemein zur Energieversorgung, zur Signalverarbeitung und Steuerung des Aktuators 6 dienen. Es sei ausdrücklich darauf hingewiesen, dass deren zeichnerische Darstellung der Figur 2 rein schematisch ist, insbesondere dass diese auch an anderer Position innerhalb des Gehäuses 7 angeordnet sein kann und/oder anders dimensioniert bzw. gestaltet sein kann.

Im gezeigten Beispiel ist an der Leiterplatte 11 ein Leistungsbaustein 13 angeordnet, zudem grenzt an die Leiterplatte 11 ein Kühlkörper 12 an, der im Betrieb passive Kühlfunktionen übernimmt, um eine Überhitzung elektronischer Bauteile zu verhindern. Es versteht sich, dass die Leiterplatte 11 an zumindest ein Bordnetz des zugehörigen Kraftfahrzeugs angeschlossen wird, um mit einer erforderlichen Bordspannung versorgt zu werden und dass die Leiterplatte 11 mit dem Elektromotor 8 sowie mit gegebenenfalls weiteren im Gehäuse 7 untergebrachten Komponenten wie beispielsweise Sensoren elektrisch verbunden ist.

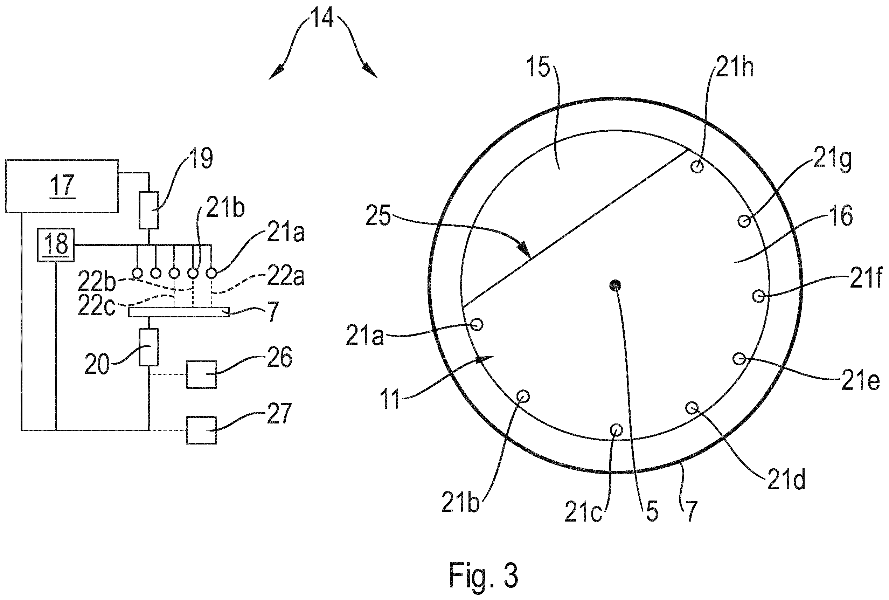

Das Gehäuse 7 muss zum Anschluss der Leiterplatte 11 an ein Bordnetz des Kraftfahrzeugs und auch zur Signalübertragung an das Kraftfahrzeug elektrisch mit diesem verbunden sein. Entsprechend weist das Gehäuse 7 zumindest in einem Bereich, der hier nicht eingezeichnet ist, eine Öffnung auf. Auch wenn eine Abdichtung einer solchen Öffnung auf sorgfältige Weise angestrebt wird, so kann über die Lebensdauer des Aktuators 6 nicht ausgeschlossen werden, dass unter Einwirkung starker Umwelteinflüsse wie bspw. Spritzwasser Feuchtigkeit in Form von Wasser in das Gehäuse 7 eindringt. Ein Eindringen von Wasser kann auch im Bereich der drehbaren Lagerung des rechten Stabilisatorabschnitts 4b gegenüber dem Gehäuse 7 auftreten. Insbesondere im Hinblick auf eine unbeeinträchtigte Funktion innerhalb des Gehäuses 7 angeordneter elektronischer Komponenten, insbesondere der Leiterplatte 11, ist es erstrebenswert, den Eintritt eines flüssigen Mediums in das Gehäuse 7 frühzeitig zu erkennen. Eine diesbezügliche Lösungsmöglichkeit sei anhand der nachfolgenden Figuren 3-5 beschrieben.

Figur 3 zeigt eine Sensoranordnung 14, die erfindungsgemäß an einem wie anhand von Figur 2 erläuterten Aktuator 6 zum Einsatz kommen kann, um auf vorteilhafte Weise den Eintritt eines flüssigen Mediums in das Gehäuse 7 des Aktuators 6 erkennen zu können. Figur 3 enthält zur Erläuterung im linken Bildbereich eine schematische Schaltungsanordnung, im rechten Bildbereich eine schematische Schnittdarstellung des Gehäuses 7 des Aktuators 6 mit darin befindlicher Leiterplatte 11, wobei die beiden Darstellungen funktional miteinander korrespondieren (da sie denselben Sachverhalt betreffen) und daher nachfolgend zusammen erläutert werden.

Im rechten Bildbereich, der einen Schnitt durch das Gehäuse 7 eines Aktuators entlang der Rotationsachse 5 wiedergibt, ist zu sehen, dass das Gehäuse 7 eine in Projektion entlang der Rotationachse 5 kreisrunde Außenkontur (korrespondieren mit der zylindrischen Grundform des Gehäuses wie an von Fig. 2 erläutert) aufweist. Innerhalb des Gehäuses 7 befindet sich eine Leiterplatte 11, die als im Wesentlichen flacher Körper mit zur Rotationsachse 5 orthogonaler Einbaulage ausgebildet ist. Die Leiterplatte 11 erstreckt sich somit im Wesentlichen quer zur Rotationsachse 5 und weist zumindest bereichsweise eine kreisförmige Außenkontur auf. Im gezeigten Ausführungsbeispiel berührt die Leiterplatte 11 das Gehäuse 7 in keinem Bereich.

Die Leiterplatte 11 gliedert sich in zwei durch eine galvanische Trennung 25 voneinander getrennte Bereiche 15 und 16. Ein Bereich entspricht einem ersten Schaltungsbereich 15 der Leiterplatte 11, welcher wiederum von einem ersten Bordnetz 26 des Kraftfahrzeugs gespeist wird. Der weiterer Bereich entspricht einem zweiten Schaltungsbereich 16, der wiederum von einem zweiten Bordnetz 27 des Kraftfahrzeugs gespeist wird. Entsprechend werden der erste Schaltungsbereich 15 und der zweite Schaltungsbereich 16 auf unterschiedlichen Spannungsniveaus betrieben, was die galvanische Trennung 25 auf der Leiterplatte 11 notwendig macht, um einen Kurzschluss zwischen den Bordnetzen zu vermeiden.

Das Gehäuse 7 des Aktuators 6 besteht aus einem elektrisch leitfähigen Material, einem Metall. Wie im rechten Bildbereich der Figur 3 zu sehen, sind an einem gehäusenahen umfänglich verlaufenden Randabschnitt der Leiterplatte 11 in deren zweitem Schaltungsbereich 16 acht Messpunkte 21a, 21b, 21c, 21d, 21e, 21f, 21g und 21h voneinander beabstandet angeordnet. Von jedem dieser Messpunkte 21a bis 21h jeweils zum elektrisch leitfähigen Gehäuse 7 hin verläuft eine Messstrecke, mittels derer sich ein Füllstand des Gehäuses mit einem elektrisch leitfähigen Medium überwachen lässt. Hierzu sei auf den linken Bildbereich der Figur 3 verwiesen. Dieser zeigt schematisch eine Schaltung, mit welcher sich die im rechten Bildbereich dargestellte Anordnung als Sensoranordnung nutzen lässt. Schematisch dargestellt sind mehrere Messpunkte, von denen beispielhaft (verkürzt) nur die Messpunkte 21a und 21b bezeichnet sind. Von jedem dieser Messpunkte 21a, 21b verläuft eine Messstrecke 22a, 22b (usw.) zum Gehäuse 7. Die Messpunkte 21a, 21b (usw.) sind über einen hochohmigen Reihenwiderstand 19 an eine Spannungsversorgung 17 angeschlossen. Andererseits ist das Gehäuse 7 über einen Widerstand 20 mit dem Massepotential der elektrischen Spannungsversorgung 17 verbunden. Dieses entspricht auch dem Massepotential des ersten Bordnetzes 26 und des zweiten Bordnetzes 27.

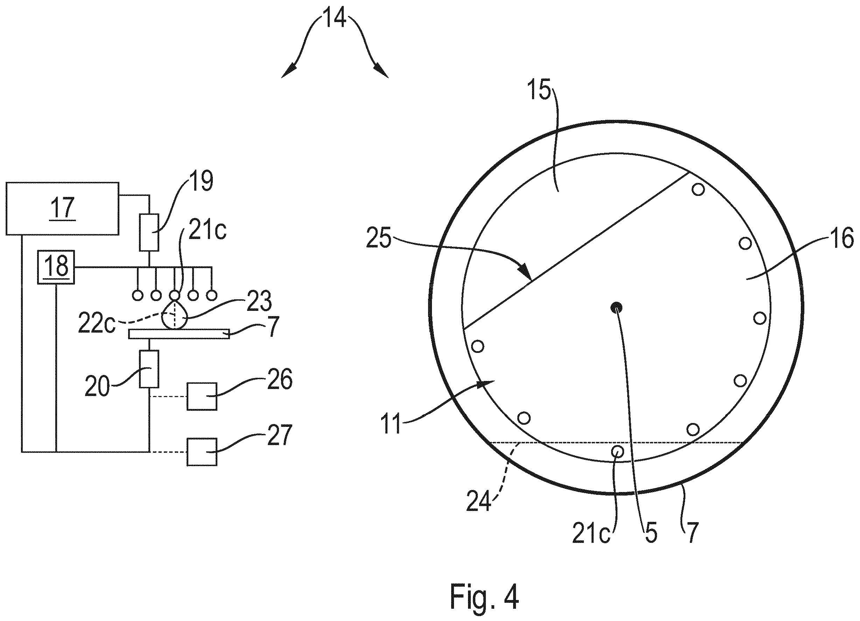

Ein Steuergerät 18 (Mikrocontroller) misst die an den Messpunkten 21a, 21b (usw.) anliegende Spannung und ist dadurch in der Lage einen Spannungsabfall an einem der Messpunkte unter einem vorgebbaren Schwellwert dem Ereignis eines erfolgten Medieneintritts in das Gehäuse 7 zuzuordnen und ggfls. eine Ersatzreaktion auszulösen. Dies sei anhand von Figur 4 erläutert.

Figur 4 zeigt die Sensoranordnung 14 wie anhand von Figur 3 bereits hinsichtlich des Aufbaus erläutert. Im Unterschied zur Darstellung gemäß Figur 3 ist nun in das Gehäuse 7 eine nicht unerhebliche Menge an Wasser eingetreten und hat sich in einem unteren Bereich des Gehäuses 7 angesammelt, angedeutet durch die Wasserlinie 24. Ein in dieser Einbaulage der Leiterplatte 11 in Bilddarstellung unten liegender Messpunkt 21c taucht daher in das angesammelte Wasser unterhalb der Wasserlinie 24 ein, was ein unerwünschter Zustand ist. Im linken Bildbereich der Figur 4 ist dies vereinfacht dargestellt durch eingetretenes Medium 23 in Form eines Wassertropfens. Das eingetretene Medium 23 bewirkt, dass in diesem Fall die Messstrecke 22c eine deutlich erhöhte elektrische Leitfähigkeit aufweist, welche unmittelbar durch das Steuergerät 18 erfasst wird, womit auf den erfolgten Medieneintritt rückgeschlossen werden kann.

Es ist ersichtlich, dass die in Figur 4 im rechten Bildbereich dargestellte Situation lediglich beispielhaft ist. Bei einer anderen Ausrichtung des Gehäuses 7 bzw. einer anderen Einbaulage der Leiterplatte 11 (jeweils bezogen auf die rotatorische Ausrichtung um die Rotationsachse 5) kann es sein, dass sich das flüssige Medium in der Nähe eines anderen Messpunktes ansammelt, wenn dieser bezogen auf die Schwerkraftrichtung im unteren Teil des Gehäuses 7 liegt. Entsprechend ermöglicht die Sensoranordnung 14 wie anhand der Figuren 3 und 4 erläutert, dass ein Medieneintritt zu einem großen Teil unabhängig von der Ausrichtung der Leiterplatte möglich ist.

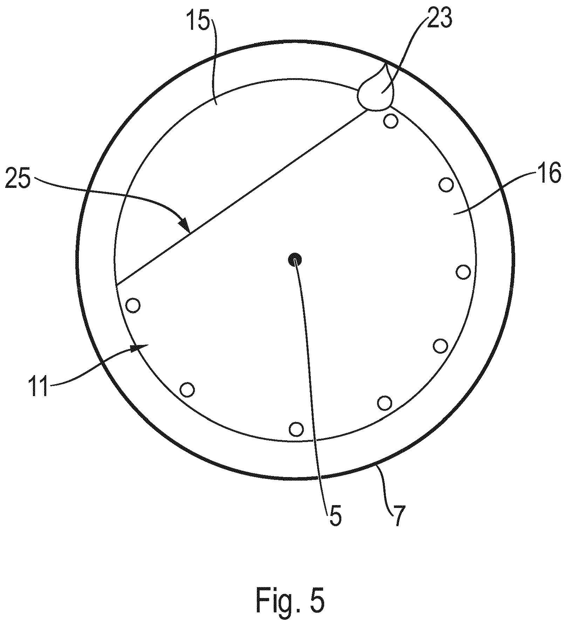

Figur 5 soll ergänzend verdeutlichen, dass insbesondere im Grenzbereich, also im Bereich der galvanischen Trennung 25 zwischen dem ersten Schaltungsbereich 15 und dem zweiten Schaltungsbereich 16 eine Überwachung auf Medienkontakt von besonderer Bedeutung ist. Da im gezeigten Ausführungsbeispiel auf der Leiterplatte 11 auf verhältnismäßig engen Bauraum Verbindungen zu zwei unterschiedlichen Bordnetzen (erstes Bordnetz 26, zweites Bordnetz 27) vorliegen, spielt eine Überwachung auf Medieneintritt in diesem Bereich (eingetretenes Medium 23 in Form des gezeichneten Wassertropfens) eine besonders hohe Rolle, da ein Überspringen zwischen den Bordnetzen nicht nur in Bezug auf den Aktuator 6, sondern auch auf das Fahrzeug bzw. auf dessen Bordnetze und damit verbundene Komponenten negative Auswirkungen haben kann.

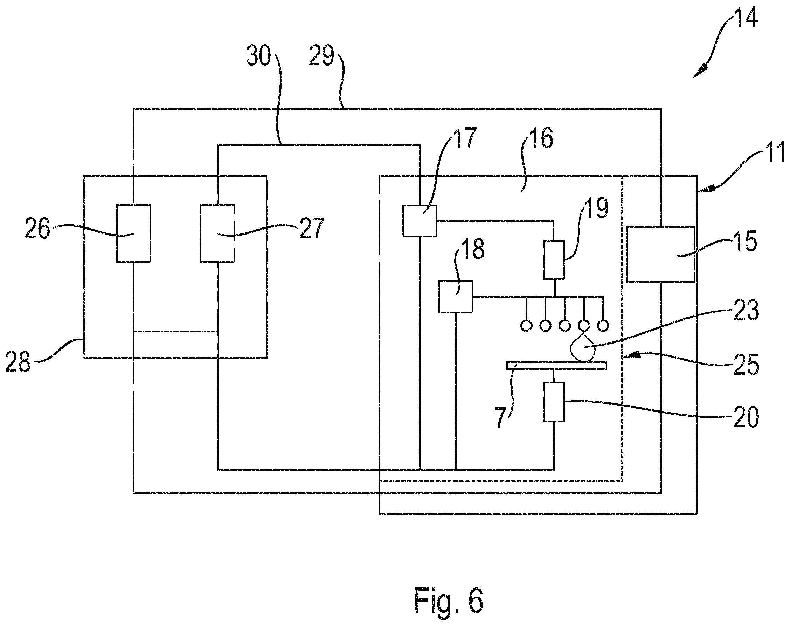

Fig. 6 zeigt in einer schematischen Darstellung ein weiteres Beispiel einer Schaltungsanordnung, die für eine wie zuvor beschriebene Sensoranordnung 14 einer mechatronischen Fahrwerkeinrichtung zum Einsatz kommen kann. Der Darstellung lässt entnehmen, dass diese einen grundsätzlich vergleichbaren Aufbau aufweist, wie anhand der Fig. 3 bis 5 beschrieben. Entsprechend sind Bauteile mit gleicher Funktion auch mit den gleichen Bezugszeichen bezeichnet und brauchen zur Vermeidung von Wiederholungen nicht erneut beschrieben zu werden. Nachfolgend sei daher insbesondere auf unterscheidende Merkmale eingegangen. Aus diesen geht eine bevorzugte Umsetzung an einem Fahrzeug hervor.

Gemäß Fig. 6 ist die Leiterplatte 11 durch ein Rechteck gezeichnet. Damit soll zeichnerisch angedeutet werden, dass innerhalb des Rechtecks befindliche Merkmale (Bezugszeichen 15, 16, 17, 18, 19, 20) baulich der Leiterplatte zugeordnet sind. Eine Ausnahme davon bildet das Gehäuse 7, das zur Veranschaulichung seiner im Zusammenhang der Erfindung zusätzlich wahrgenommenen elektrischen Funktion (nämlich als Masseleiter innerhalb der Sensoranordnung) ebenfalls im Rechteck eingezeichnet ist, baulich jedoch die Leiterplatte 11 umgibt (vergleiche Fig. 2 bis 5).

Fig. 6 lässt sich weiterhin entnehmen, dass der erste Schaltungsbereich 15 der Leiterplatte 11 einem ersten Bordnetz 26, und dass der zweite Schaltungsbereich 16 der Leiterplatte 11 einem zweiten Bordnetz 27 zugeordnet ist. Der erste Schaltungsbereich 15 wird auf einer ersten Spannung 29, der zweite Schaltungsbereich 16 wird auf einer zweiten Spannung 30 betrieben. Die zweite Spannung 30 ist deutlich, beispielsweise mehrfach höher als die erste Spannung 29. Entsprechend sind auf der Leiterplatte 11 die Schaltungsbereiche 15 und 16 durch die galvanische Trennung 25 voneinander getrennt, um nämlich ein elektrisches Übersprechen vom ersten Schaltungsbereich 15 auf den zweiten Schaltungsbereich 16 zu verhindern.

Die beiden Bordnetze, das erste Bordnetz 26 und das zweite Bordnetz 27, denen die Schaltungsbereiche 15 und 16 jeweils zugeordnet sind und von denen diese spannungsmäßig versorgt werden, sind dem Fahrzeug 28 zugeordnet. Mit anderen Worten handelt es sich bei den Bordnetzen 26 und 27 um fahrzeugeigene Spannungsversorgungen, die baulich im Fahrzeugaufbau des den Aktuator aufnehmenden Fahrzeugs angeordnet sind. Das Fahrzeug verfügt ensprechend über zwei Bordnetze 26, 27 mit unterschiedlichem Spannungsniveau. Wie Fig. 6 andeutet, sind die Massepotentiale der beiden Bordnetze 26, 27 am Fahrzeug 28 (aufbauseitig) miteinander (galvanisch) verbunden. Innerhalb des Aktuators 6, insbesondere auf der Leiterplatte 11 sind die Massen hingegen getrennt. Aus der auf der Leiterplatte 11 bewusst gewählten galvanischen Trennung der Bordnetze, die jedoch aufbauseitig (Fahrzeug 28) masseseitig verbunden sind ergibt sich ein besonderer Bedarf, während des Betriebs des Aktuators 6 ein elektrisches Übersprechen zwischen den Bereichen 15 und 16 zu vermeiden, insbesondere um negative Einflüsse auf die fahrzeugeigenen Bordnetze zu verhindern. Die Erfindung trägt hierzu vorteilhaft bei.

Ganz allgemein kann die zuvor beschriebene Spannungsüberwachung an den Messstrecken 22a bis 22h während des laufenden Betriebs des Aktuators 6 erfolgen. Da die Anordnung der Messpunkte auf der Leiterplatte 11 eine verhältnismäßig einfache Maßnahme darstellt, lässt sich auf die beschriebene Weise mit verhältnismäßig einfachen Mitteln eine wirksame Überwachung des Gehäuses auf Medieneintritt verwirklichen.

### Bezugszeichen

- 1: verstellbarer Wankstabilisator
- 2a; 2b: linkes Rad; rechtes Rad
- 3a; 3b: linke Radaufhängung, rechte Radaufhängung
- 4a; 4b: linker Stabilisatorabschnitt; rechter Stabilisatorabschnitt
- 5: Rotationsachse
- 6: Aktuator
- 7: Gehäuse
- 8: Elektromotor
- 9: mehrstufiges Planetengetriebe
- 10: Lagerschild
- 11: Leiterplatte
- 12: Kühlkörper
- 13: Leistungsbaustein
- 14: Sensoranordnung
- 15: erster Schaltungsbereich
- 16: zweiter Schaltungsbereich
- 17: Spannungsversorgung
- 18: Steuergerät (Mikrocontroller)
- 19: Widerstand
- 20: Widerstand
- 21a; 21b; ... 22h: Messpunkte (a bis h)
- 22a; 22b, 22c: Messstrecke
- 23: eingetretenes Medium (elektrisch leitfähig, Wasser)
- 24: Wasserlinie
- 25: galvanische Trennung
- 26: erstes Bordnetz
- 27: zweites Bordnetz
- 28: Fahrzeug (aufbauseitig)
- 29: erste Spannung
- 30: zweite Spannung

## Patentansprüche

1. Verstellbarer Wankstabilisator (1) für ein Kraftfahrzeug, aufweisend zwei Stabilisatorabschnitte (4a, 4b), die mit Radaufhängungen (3a, 3b) zugehöriger Räder (2a, 2b) des Kraftfahrzeugs koppelbar sind, und eine als Aktuator für den verstellbaren Wankstabilisator (1) ausgeführte mechatronische Fahrwerkeinrichtung (6), mit der sich die Stabilisatorabschnitte (4a, 4b) um eine Rotationsachse (5) gegeneinander verdrehen lassen, um ein Wankverhalten des Kraftfahrzeugs zu beeinflussen, wobei die mechatronische Fahrwerkeinrichtung (6) ein Gehäuse (7) und zumindest ein in dem Gehäuse (7) befindliches Funktionselement (11) aufweist, wobei die mechatronische Fahrwerkseinrichtung (6) einen Elektromotor (8) und ein Getriebe (9) umfasst, die zusätzlich zum Funktionselement (11) in dem Gehäuse (7) angeordnet sind, **gekennzeichnet durch** Mittel (14) zur Erkennung des Eintritts eines flüssigen Mediums (23) in das Gehäuse (7), wobei es sich bei dem zumindest einen in dem Gehäuse (7) befindlichen Funktionselement um eine mechatronische Komponente in Form einer Leiterplatte (11) zur Aufnahme elektronischer Bauteile handelt, die zur Steuerung und/oder Energieversorgung eines weiteren im Gehäuse (7) angeordneten Funktionselements und/oder zur Signalverarbeitung dienen, wobei das Funktionselement (11) einen gehäusenahen, umfänglich verlaufenden Randabschnitt aufweist, an welchem eine Mehrzahl voneinander beabstandeter Messpunkte (21a, 21b, 21c, 21d, 21e, 21f, 21g, 21h) angeordnet sind, wobei die mehreren Messpunkte (21a, 21b, 21c, 21d, 21e, 21f, 21g, 21h) jeweils unter Zwischenschaltung eines Reihenwiderstands (19) an eine elektrische Spannungsquelle (17) angeschlossen ist, wobei das Gehäuse (7) unter Zwischenschaltung eines Reihenwiderstands (20) mit dem Massepotential der elektrischen Spannungsquelle (17) verbunden ist.

2. Verstellbarer Wankstabilisator nach Anspruch 1, **dadurch gekennzeichnet, dass** die Mittel eine Sensoranordnung (14) beinhalten, die betreibbar ist, einen Füllstand des Gehäuses (7) mit einem elektrisch leitfähigen Medium (23) zu überwachen.

3. Verstellbarer Wankstabilisator nach einem der vorigen Ansprüche, **dadurch gekennzeichnet, dass** sich das Funktionselement (11) in wenigstens zwei insbesondere galvanisch voneinander getrennte Bereiche (15, 16) gliedert.

4. Verstellbarer Wankstabilisator nach einem der vorigen Ansprüche, **dadurch gekennzeichnet, dass** das Gehäuse (7) eine zylindrische, sich entlang einer Rotationsachse (5) erstreckende Grundform aufweist.

5. Verstellbarer Wankstabilisator nach einem der vorigen Ansprüche, **dadurch gekennzeichnet, dass** das Funktionselement (11) als im Wesentlichen flacher Körper mit zur Rotationsachse (5) des Gehäuses (7) orthogonaler Einbaulage ausgebildet ist.

6. Verstellbarer Wankstabilisator nach einem der vorigen Ansprüche, **dadurch gekennzeichnet, dass** die Überwachung einer Messstrecke (22a, 22b, 22c) auf deren elektrische Leitfähigkeit durch Überwachung der elektrischen Spannung zwischen einem jeweiligen Messpunkt (21a, 21b, 21c, 21d, 21e, 21f, 21g, 21h) und dem Gehäuse (7), insbesondere mittels eines Steuergeräts (18) erfolgt.

7. Verstellbarer Wankstabilisator nach einem der vorigen Ansprüche, **gekennzeichnet durch** ein Steuergerät (18), das betreibbar ist, einen Spannungsabfall an einem der Messpunkte (21a, 21b, 21c, 21d, 21e, 21f, 21g, 21h) unter einen vorgebbaren Schwellwert dem Ereignis eines erfolgten Medieneintritts in das Gehäuse (7) zuzuordnen und eine Ersatzreaktion auszulösen.

8. Verstellbarer Wankstabilisator nach einem der vorigen Ansprüche, **dadurch gekennzeichnet, dass** ein Messpunkt (21a, 21b, 21c, 21d, 21e, 21f, 21g, 21h), vorzugsweise die mehreren Messpunkte (21a, 21b, 21c, 21d, 21e, 21f, 21g, 21h) jeweils so angeordnet ist bzw. sind, dass im Fall eines Medieneintritts ab Erreichen einer kritischen Befüllung des Gehäuses (7) mit dem flüssigen Medium (23) zumindest ein Messpunkt (21a, 21b, 21c, 21d, 21e, 21f, 21g, 21h) in das Medium (23) eintaucht und dadurch eine elektrische Verbindung zwischen dem eingetauchten Messpunkt (21a, 21b, 21c, 21d, 21e, 21f, 21g, 21h) und dem Gehäuse (7) herstellt.

9. Verstellbarer Wankstabilisator nach einem der vorigen Ansprüche, **dadurch gekennzeichnet, dass** die mehreren Messpunkte (21a, 21b, 21c, 21d, 21e, 21f, 21g, 21h) über einen umfänglichen Bereich des Gehäuses (7) verteilt sind, so dass unabhängig von der rotatorischen Ausrichtung des Gehäuses (7) und/oder des Funktionselements (11) in Bezug auf die Rotationsachse (5) zumindest ein Messpunkt (21a, 21b, 21c, 21d, 21e, 21f, 21g, 21h) in einem untenliegenden Bereich des Gehäuses (7) liegt und damit zur frühen Erkennung eines Medieneintritts in das Gehäuse (7) nutzbar ist.

## Claims

1. Adjustable anti-roll bar (1) for a motor vehicle, comprising two anti-roll bar sections (4a, 4b), which can be coupled to wheel suspension systems (3a, 3b) of associated wheels (2a, 2b) of the motor vehicle, and a mechatronic chassis device (6) which is designed as an actuator for the adjustable anti-roll bar (1) and by way of which the anti-roll bar sections (4a, 4b) can be rotated with respect to each other about a rotational axis (5), in order to influence an anti-roll behaviour of the motor vehicle, wherein the mechatronic chassis device (6) comprises a housing (7) and at least one functional element (11) located in the housing (7), wherein the mechatronic chassis device (6) comprises an electric motor (8) and a gearbox (9), which are arranged in the housing (7) in addition to the functional element (11), **characterized by** means (14) for detecting the entry of a liquid medium (23) into the housing (7), wherein the at least one functional element located in the housing (7) is a mechatronic component in the form of a printed circuit board (11) for receiving electronic components, which are used for controlling and/or supplying power to a further functional element arranged in the housing (7) and/or for signal processing, wherein the functional element (11) comprises a peripherally extending edge portion which is near the housing and on which a plurality of measuring points (21a, 21b, 21c, 21d, 21e, 21f, 21g, 21h) which are spaced apart from one another are arranged, wherein the plurality of measuring points (21a, 21b, 21c, 21d, 21e, 21f, 21g, 21h) are each connected to an electrical voltage source (17) with intermediate connection of a series resistance (19), wherein the housing (7) is connected to the ground potential of the electrical voltage source (17) with intermediate connection of a series resistance (20).

2. Adjustable anti-roll bar according to Claim 1, **characterized in that** the means include a sensor arrangement (14), which can be operated to monitor a filling level of the housing (7) with an electrically conductive medium (23).

3. Adjustable anti-roll bar according to either of the preceding claims, **characterized in that** the functional element (11) is divided into at least two, in particular galvanically separated, regions (15, 16).

4. Adjustable anti-roll bar according to any one of the preceding claims, **characterized in that** the housing (7) has a cylindrical basic shape extending along a rotational axis (5).

5. Adjustable anti-roll bar according to any one of the preceding claims, **characterized in that** the functional element (11) is formed as a substantially flat body with an installation position orthogonal with respect to the rotational axis (5) of the housing (7).

6. Adjustable anti-roll bar according to any one of the preceding claims, **characterized in that** the monitoring of a measuring path (22a, 22b, 22c) for its electrical conductivity takes place by monitoring the electrical voltage between a respective measuring point (21a, 21b, 21c, 21d, 21e, 21f, 21g, 21h) and the housing (7), in particular by means of a control unit (18).

7. Adjustable anti-roll bar according to any one of the preceding claims, **characterized by** a control unit (18), which can be operated to assign a voltage drop at one of the measuring points (21a, 21b, 21c, 21d, 21e, 21f, 21g, 21h) below a predetermined threshold value to the event of an entry of medium having taken place into the housing (7) and to trigger a replacement reaction.

8. Adjustable anti-roll bar according to any one of the preceding claims, **characterized in that** a measuring point (21a, 21b, 21c, 21d, 21e, 21f, 21g, 21h), preferably the plurality of measuring points (21a, 21b, 21c, 21d, 21e, 21f, 21g, 21h), is/are arranged in such a way that, in the event of an entry of medium, at least one measuring point (21a, 21b, 21c, 21d, 21e, 21f, 21g, 21h) dips into the medium (23) from a critical filling of the housing (7) with the liquid medium (23) being reached, thereby creating an electrical connection between the immersed measuring point (21a, 21b, 21c, 21d, 21e, 21f, 21g, 21h) and the housing (7).

9. Adjustable anti-roll bar according to any one of the preceding claims, **characterized in that** the multiple measuring points (21a, 21b, 21c, 21d, 21e, 21f, 21g, 21h) are distributed over a peripheral region of the housing (7), such that, independently of the rotational orientation of the housing (7) and/or the functional element (11) with respect to the rotational axis (5), at least one measuring point (21a, 21b, 21c, 21d, 21e, 21f, 21g, 21h) is located in a lower region of the housing (7) and can therefore be used for early detection of an entry of medium into the housing (7).

## Revendications

1. Stabilisateur de roulis réglable (1) pour un véhicule automobile, comprenant deux sections de stabilisateur (4a, 4b) qui peuvent être couplées à des suspensions de roue (3a, 3b) de roues correspondantes (2a, 2b) du véhicule automobile, et un dispositif de châssis mécatronique (6) réalisé en tant qu'actionneur pour le stabilisateur de roulis réglable (1), au moyen duquel les sections de stabilisateur (4a, 4b) peuvent être tournées l'une par rapport à l'autre autour d'un axe de rotation (5) afin d'influencer un comportement de roulis du véhicule automobile, le dispositif de châssis mécatronique (6) présentant un boîtier (7) et au moins un élément fonctionnel (11) se trouvant dans le boîtier (7), le dispositif de châssis mécatronique (6) comprenant un moteur électrique (8) et une transmission (9), qui sont disposés dans le boîtier (7) en plus de l'élément fonctionnel (11), **caractérisé par** des moyens (14) de détection de l'entrée d'un milieu liquide (23) dans le boîtier (7), l'au moins un élément fonctionnel se trouvant dans le boîtier (7) étant un composant mécatronique sous la forme d'une carte de circuit imprimé (11) destinée à recevoir des composants électroniques, qui servent à la commande et/ou à l'alimentation en énergie d'un autre élément fonctionnel disposé dans le boîtier (7) et/ou au traitement de signaux, l'élément fonctionnel (11) présentant une section de bord périphérique proche du boîtier, au niveau de laquelle une pluralité de points de mesure espacés les uns des autres (21a, 21b, 21c, 21d, 21e, 21f, 21g, 21h) sont disposés, ladite pluralité de points de mesure (21a, 21b, 21c, 21d, 21e, 21f, 21g, 21h) étant chacun reliés à une source de tension électrique (17) par l'intermédiaire d'une résistance série (19), le boîtier (7) étant relié, par l'intermédiaire d'une résistance série (20), au potentiel de masse de la source de tension électrique (17).

2. Stabilisateur de roulis réglable selon la revendication 1, **caractérisé en ce que** les moyens comprennent un agencement de capteurs (14), qui peut être exploité pour surveiller un niveau de remplissage du boîtier (7) avec un milieu électriquement conducteur (23).

3. Stabilisateur de roulis réglable selon l'une quelconque des revendications précédentes, **caractérisé en ce que** l'élément fonctionnel (11) se subdivise en au moins deux zones (15, 16), en particulier séparées galvaniquement l'une de l'autre.

4. Stabilisateur de roulis réglable selon l'une quelconque des revendications précédentes, **caractérisé en ce que** le boîtier (7) présente une forme de base cylindrique s'étendant le long d'un axe de rotation (5).

5. Stabilisateur de roulis réglable selon l'une quelconque des revendications précédentes, **caractérisé en ce que** l'élément fonctionnel (11) est réalisé sous la forme d'un corps essentiellement plat avec une position de montage orthogonale à l'axe de rotation (5) du boîtier (7).

6. Stabilisateur de roulis réglable selon l'une quelconque des revendications précédentes, **caractérisé en ce que** la surveillance d'un trajet de mesure (22a, 22b, 22c) quant à sa conductivité électrique est effectuée par surveillance de la tension électrique entre un point de mesure respectif (21a, 21b, 21c, 21d, 21e, 21f, 21g, 21h) et le boîtier (7), en particulier au moyen d'une unité de commande (18).

7. Stabilisateur de roulis réglable selon l'une quelconque des revendications précédentes, **caractérisé par** une unité de commande (18) qui peut être exploitée pour associer une chute de tension à l'un des points de mesure (21a, 21b, 21c, 21d, 21e, 21f, 21g, 21h) en dessous d'une valeur seuil prédéterminable à l'événement d'une entrée de milieu dans le boîtier (7) et pour déclencher une réaction de remplacement.

8. Stabilisateur de roulis réglable selon l'une quelconque des revendications précédentes, **caractérisé en ce qu'**un point de mesure (21a, 21b, 21c, 21d, 21e, 21f, 21g, 21h), de préférence les plusieurs points de mesure (21a, 21b, 21c, 21d, 21e, 21f, 21g, 21h), est respectivement agencé ou sont respectivement agencés de telle sorte qu'en cas d'entrée de milieu, à partir de l'atteinte d'un niveau de remplissage critique du boîtier (7) avec le milieu liquide (23), au moins un point de mesure (21a, 21b, 21c, 21d, 21e, 21f, 21g, 21h) plonge dans le milieu (23) et établit ainsi une liaison électrique entre le point de mesure immergé (21a, 21b, 21c, 21d, 21e, 21f, 21g, 21h) et le boîtier (7).

9. Stabilisateur de roulis réglable selon l'une quelconque des revendications précédentes, **caractérisé en ce que** les plusieurs points de mesure (21a, 21b, 21c, 21d, 21e, 21f, 21g, 21h) sont répartis sur une zone périphérique du boîtier (7), de sorte que, indépendamment de l'orientation rotatoire du boîtier (7) et/ou de l'élément fonctionnel (11) par rapport à l'axe de rotation (5), au moins un point de mesure (21a, 21b, 21c, 21d, 21e, 21f, 21g, 21h) se trouve dans une zone inférieure du boîtier (7) et peut ainsi être utilisé pour la détection précoce d'une entrée de milieu dans le boîtier (7).
